# EUROPÄISCHE PATENTSCHRIFT

(11) **EP 2 461 999 B1**
(45) Veröffentlichungstag und Bekanntmachung des Hinweises auf die Patenterteilung: **04.09.2013**
(21) Anmeldenummer: 10737769.9
(22) Anmeldetag: 15.07.2010
(51) Int. Cl.: B60K 35/00, G01D 11/28

(54) **OPTISCHES ANZEIGEELEMENT AUS SELEKTIV BELEUCHTBAREN KONZENTRISCHEN RINGEN**
OPTICAL DISPLAY ELEMENT COMPRISING SELECTIVELY ILLUMINATABLE CONCENTRIC RINGS
ÉLÉMENT D'AFFICHEUR OPTIQUE COMPRENNANT DES ANNEAUX CONCENTRIQUE À ÉCLAIRAGE SÉLECTIF

(30) Priorität: 05.08.2009 DE 102009036211
(43) Veröffentlichungstag der Anmeldung: 13.06.2012
(73) Patentinhaber: TRW Automotive Electronics & Components GmbH, 78315 Radolfzell (DE)
(72) Erfinder: KOEHNLEIN, Harald, 78244 Gottmadingen (DE); KORHERR, Joachim, 78359 Orsingen (DE)
(74) Vertreter: Prinz & Partner
(86) Internationale Anmeldenummer: PCT/EP2010/004319
(87) Internationale Veröffentlichungsnummer: WO 2011/015278

(56) Entgegenhaltungen:
- EP-A1- 0 684 451
- JP-A- 2003 083 776
- JP-A- 2003 139 579
- JP-A- 2005 291 786
- JP-A- 2010 117 321
- US-A1- 2003 090 886
- US-B1- 6 675 650

## Beschreibung

Die Erfindung betrifft ein optisches Anzeigeelement aus selektiv beleuchtbaren konzentrischen Ringen.

Ein solches Anzeigeelement ist nützlich zur intuitiv erkennbaren Darstellung analoger Größen, die z.B. Funktionszustände in Fahrzeugen signalisieren. Für eine feine Auflösung müssen benachbarte konzentrische Ringe einen kleinen radialen Abstand voneinander haben.

Aus der EP 0 684 451 A1 ist ein optisches Anzeigeelement bekannt, welches mehrere selektiv beleuchtbare, und um eine gemeinsame Achse konzentrisch angeordnete Ringe aufweist. Die konzentrischen Ringe werden durch eine Lichtaustrittsfläche des jeweiligen Lichtleitkörpers gebildet. Der Lichtleitkörper weist eine Lichteintrittsfläche auf, die Licht von einer zugeordneten, selektiv aktivierbaren Lichtquelle in diesen einkoppelt.

Mit herkömmlicher Technik, wie das Herausbrennen aus einer Lackschicht mittels Laser oder Bedrucken und Verwenden darunterliegender Lichtleiter zur Beleuchtung der einzelnen Ringe, gelingt es aufgrund der Addition verschiedener Toleranzen aber nicht, den radialen Abstand unter etwa 0,4 mm zu reduzieren.

Es ist eine Aufgabe der Erfindung, ein optisches Anzeigeinstrument aus mehreren selektiv beleuchtbaren, und um eine gemeinsame Achse konzentrisch angeordneten Ringen anzugeben, bei dem eine separate Beleuchtung mit ausreichender Helligkeit der Ringe möglich ist, wobei die konzentrisch angeordneten Ringe außerdem mit sehr geringem radialen Abstand angeordnet sind.

Die Aufgabe wird durch den Gegenstand des unabhängigen Anspruchs 1 gelöst, vorteilhafte Ausführungen ergeben sich aus den abhängigen Ansprüchen.

Durch die Erfindung wird ein optisches Anzeigeelement aus selektiv beleuchtbaren konzentrischen Ringen geschaffen, das radiale Abstände von nur etwa 0,2 mm oder weniger ermöglicht. Bei dem erfindungsgemäßen optischen Anzeigeelement sind die konzentrischen Ringe durch die Lichtaustrittsfläche je eines Lichtleiterkörpers dargestellt, der eine Lichteintrittsfläche aufweist, die Licht von einer zugeordneten, selektiv aktivierbaren Lichtquelle einkoppelt, wobei die Lichteintrittsfläche bezogen auf die gemeinsame Achse eine größere radiale Ausdehnung hat als die Lichtaustrittsfläche und die Lichtleiterkörper unmittelbar radial aneinandergrenzende lichtsperrende Seitenflächen haben. Durch diese Ausgestaltung bestimmen die Lichtleiterkörper allein die Geometrie der konzentrischen Ringe. Da die Lichtleiterkörper sehr genau gefertigt werden können, ergeben sich die angestrebten geringen Toleranzen.

Weitere Vorteile und Merkmale der Erfindung ergeben sich aus der folgenden Beschreibung unter Bezugnahme auf die beigefügten Zeichnungen. In den Zeichnungen zeigen:
Fig. 1 ein optisches Anzeigeelement in Draufsicht; und
Fig. 2 das Anzeigeelement in Schnittansicht.

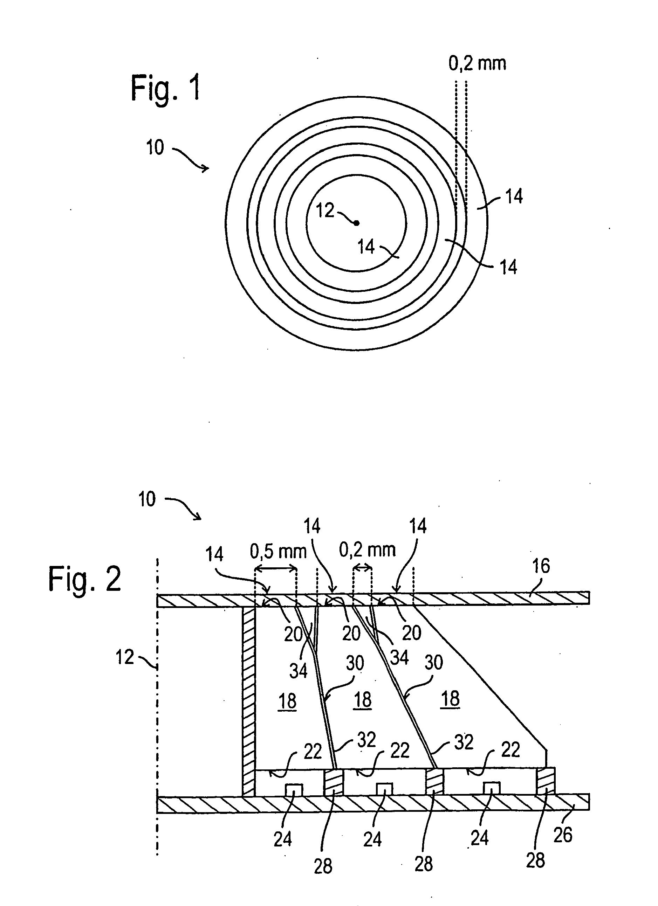

Fig. 1 zeigt ein optisches Anzeigeelement 10 aus mehreren selektiv beleuchtbaren, um eine gemeinsame Achse 12 konzentrischen Ringen 14. Zwischen den beleuchtbaren Ringen 14 ist jeweils ein radialer Abstand von 0,2 mm vorgesehen.

Fig. 2 zeigt eine Schnittansicht des optischen Anzeigeelements 10 entlang einer radialen Schnittebene. Die gemeinsame Achse 12 der konzentrischen, beleuchtbaren Ringe 14 ist auf der linken Seite der Zeichnung gezeigt. Eine zumindest teilweise transparente Folie 16 bildet die Oberfläche des optischen Anzeigeelements 10. Unter der Folie 16 sind mehrere konzentrische, ringförmige Lichtleiterkörper 18 angeordnet, die jeweils eine zur Folie 16 weisende Lichtaustrittsfläche 20, welche den jeweiligen beleuchtbaren Ring 14 darstellt, und eine von der Folie 16 abgewandte Lichteintrittsfläche 22 aufweisen.

Die Lichteintrittsfläche 22 eines Lichtleiterkörpers 18 koppelt Licht einer zugeordneten, selektiv aktivierbaren Lichtquelle 24 in den Lichtleiterkörper 18 ein. Die Lichteintrittsflächen 22 der verschiedenen Lichtleiterkörper 18 liegen in einer gemeinsamen Ebene, und die Lichtquellen 24 sind auf einer Leiterplatte 26 angeordnet, die den Lichteintrittsflächen 22 eng beabstandet gegenüberliegt.

Die Lichtleiterkörper 18 sind durch Lichtbarrieren 28 gegen Licht von Lichtquellen 24 benachbarter Lichtleiterkörper 18 abgeschirmt.

Die Lichtaustrittsflächen 20 koppeln das durch den Lichtleiterkörper 18 geleitete Licht der Lichtquelle 24 in die zumindest teilweise transparente Folie 16, wodurch der zugeordnete Ring 14 des optischen Anzeigeelements 10 beleuchtet wird.

Die Lichteintrittsflächen 22 der Lichtleiterkörper 18 haben bezogen auf die gemeinsame Achse 12 eine größere radiale Ausdehnung als die Lichtaustrittsflächen 20. Die Lichtaustrittsflächen 20 sind mit den Lichteintrittsflächen 22 durch Seitenflächen 30 verbunden, die lichtsperrend ausgebildet sind, beispielsweise durch Totalreflexion erzeugende Brechungsindexänderungen im Bereich der Seitenflächen 30 oder eine Beschichtung 32 der Seitenflächen 30, insbesondere durch physikalische Gasphasenabscheidung oder Lackieren.

Die Seitenflächen 30 Lichtleiterkörper 18 divergieren zur Lichteintrittsfläche 22 hin, wobei die Seitenflächen 30 weiter außen gelegener Lichtleiterkörper 18 stärker divergieren als die weiter innen gelegener Lichtleiterkörper 18.

Die lichtsperrenden Seitenflächen 30 der Lichtleiterkörper 18 grenzen unmittelbar radial aneinander, wodurch die Lichtleiterkörper 18 allein die Geometrie der konzentrischen Ringe 14 bestimmen. Da die Lichtleiterkörper 18 sehr genau gefertigt werden können, ergeben sich die angestrebten geringen Toleranzen.

Benachbart zu den Lichtaustrittsflächen 20 verbleibt zwischen benachbarten Seitenflächen 30 jeweils ein keilförmiger Spalt 34, der den radialen Abstand der beleuchtbaren Ringe 14 bestimmt. In Abhängigkeit des Spalts 34 kann der radiale Abstand zwischen benachbarten beleuchtbaren Ringen 14 zwischen 0,1 und 0,3 mm betragen.

## Patentansprüche

1. Optisches Anzeigeelement (10) aus mehreren selektiv beleuchtbaren, um eine gemeinsame Achse (12) konzentrischen Ringen (14), die durch die Lichtaustrittsfläche (20) je eines Lichtleiterkörpers (18) dargestellt werden, der eine Lichteintrittsfläche (22) aufweist, die Licht von einer zugeordneten, selektiv aktivierbaren Lichtquelle (24) einkoppelt, **dadurch gekennzeichnet, dass** die Lichteintrittsfläche (22) bezogen auf die gemeinsame Achse (12) eine größere radiale Ausdehnung hat als die Lichtaustrittsfläche (20) und die Lichtleiterkörper (18) unmittelbar radial aneinandergrenzende lichtsperrende Seitenflächen (30) haben.

2. Optisches Anzeigeelement (10) nach Anspruch 1, bei dem die Lichteintrittsflächen (22) der Lichtleiterkörper (18) in einer gemeinsamen Ebene liegen und die Lichtquellen (24) auf einer Leiterplatte (26) angeordnet sind, die den Lichteintrittsflächen (22) eng beabstandet gegenüberliegt.

3. Optisches Anzeigeelement (10) nach Anspruch 2, bei dem die Lichtleiterkörper (18) gegen Licht von Lichtquellen (24) benachbarter Lichtleiterkörper (18) durch Lichtbarrieren (28) abgeschirmt sind.

4. Optisches Anzeigeelement (10) nach einem der vorstehenden Ansprüche, bei dem an den Lichtleiterkörpem (18) die Lichtaustrittsflächen (20) mit den Lichteintrittsflächen (22) durch Seitenflächen (30) verbunden sind, die zur Lichteintrittsfläche (22) hin divergieren.

5. Optisches Anzeigeelement (10) nach Anspruch 4, bei dem die Seitenflächen (30) weiter außen gelegener Lichtleiterkörper (18) stärker divergieren als die weiter innen gelegener Lichtleiterkörper (18).

6. Optisches Anzeigeelement (10) nach Anspruch 4 oder 5, bei dem die Lichtleiterkörper (18) mit ihren Seitenflächen (30) unmittelbar aneinander liegen und benachbart zu den Lichtaustrittsflächen (20) jeweils ein keilförmiger Spalt (34) zwischen benachbarten Seitenflächen (30) verbleibt, der den radialen Abstand der beleuchtbaren Ringe (14) bestimmt.

7. Optisches Anzeigeelement (10) nach Anspruch 6, bei dem der radiale Abstand zwischen benachbarten beleuchtbaren Ringen (14) zwischen 0,1 und 0,3 mm beträgt.

8. Optisches Anzeigeelement (10) nach Anspruch 7, bei dem der radiale Abstand zwischen benachbarten beleuchtbaren Ringen (14) etwa 0,2 mm beträgt.

9. Optisches Anzeigeelement (10) nach einem der vorhergehenden Ansprüche, **dadurch gekennzeichnet, dass** die Seitenflächen (30) der Lichtleiterkörper (18) eine lichtsperrende Beschichtung (32) aufweisen.

## Claims

1. An optical display element (10) made up of a plurality of selectively illuminatable rings (14) which are concentric about a common axis (12) and are obtained by the light exit surface (20) of a respective optical waveguide body (18) which has a light entry surface (22) coupling light in from an associated light source (24) adapted to be selectively activated, **characterized in that** the light entry surface (22), as related to the common axis (12), has a larger radial extent than the light exit surface (20), and the optical waveguide bodies (18) have directly radially adjacent light-blocking side surfaces (30).

2. The optical display element (10) according to claim 1, in which the light entry surfaces (22) of the optical waveguide bodies (18) lie in a common plane and the light sources (24) are arranged on a printed circuit board (26) which is located opposite to and at a small distance from the light entry surfaces (22).

3. The optical display element (10) according to claim 2, in which the optical waveguide bodies (18) are shielded by light barriers (28) against light from light sources (24) of neighboring optical waveguide bodies (18).

4. The optical display element (10) according to any of the preceding claims, in which the light exit surfaces (20) of the optical waveguide bodies (18) are connected to the light entry surfaces (22) by side surfaces (30) which diverge towards the light entry surfaces (22).

5. The optical display element (10) according to claim 4, in which the side surfaces (30) of optical waveguide bodies (18) located further outside diverge more strongly than those of optical waveguide bodies (18) located further inside.

6. The optical display element (10) according to claim 4 or 5, in which the side surfaces (30) of the optical waveguide bodies (18) lie directly adjacent to each other and, adjacent to the light exit surfaces (20), a respective wedge-shaped gap (34) remains between neighboring side surfaces (30) which determines the radial distance of the illuminatable rings (14).

7. The optical display element (10) according to claim 6, in which the radial distance between neighboring illuminatable rings (14) amounts to between 0.1 and 0.3 mm.

8. The optical display element (10) according to claim 7, in which the radial distance between neighboring illuminatable rings (14) amounts to approximately 0.2 mm.

9. The optical display element (10) according to any of the preceding claims, **characterized in that** the side surfaces (30) of the optical waveguide bodies (18) have a light-blocking coating (32).

## Revendications

1. Élément (10) d'affichage optique constitué par plusieurs anneaux concentriques (14) susceptibles d'être éclairés sélectivement et concentriques autour d'un axe commun (12), qui sont représentés respectivement par la surface de sortie de lumière (20) d'un corps guide de lumière (18) qui comprend une surface d'entrée de lumière (22) qui fait coupler la lumière d'une source de lumière (24) associée susceptible d'être activée sélectivement, **caractérisé en ce que** la surface d'entrée de lumière (22) présente une extension radiale plus grande que celle de la surface de sortie de lumière (20), par rapport à l'axe commun (12), et **en ce que** les corps guides de lumière (18) présentent des faces latérales (30) de blocage de lumière qui sont radialement adjacentes directement les unes aux autres.

2. Élément (10) d'affichage optique selon la revendication 1, dans lequel les surfaces d'entrée de lumière (22) des corps guides de lumière (18) se trouvent dans un plan commun, et les sources de lumière (24) sont agencés sur une carte à circuit imprimé (26) qui est disposée en regard des surfaces d'entrée de lumière (22) en étant étroitement espacée.

3. Élément (10) d'affichage optique selon la revendication 2, dans lequel les corps guides de lumière (18) sont protégés à l'encontre de la lumière provenant de sources de lumière (24) de corps guides de lumière (18) voisins au moyen de barrières anti-lumière (28).

4. Élément (10) d'affichage optique selon l'une des revendications précédentes, dans lequel, sur les corps guides de lumière (18), les surfaces de sortie de lumière (20) sont reliées aux surfaces d'entrée de lumière (22) par des faces latérales (30) qui divergent en direction de la surface d'entrée de lumière (22).

5. Élément (10) d'affichage optique selon la revendication 4, dans lequel les faces latérales (30) de corps guides de lumière (18) situés plus à l'extérieur divergent plus fortement que celles des corps guides de lumière (18) situés plus à l'intérieur.

6. Élément (10) d'affichage optique selon la revendication 4 ou 5, dans lequel les corps guides de lumière (18) ont leurs faces latérales (30) situées directement les unes contre les autres, et un intervalle (34) en forme de coin demeure entre des faces latérales (30) voisines, au voisinage des surfaces de sortie de lumière (20), et définit la distance radiale des anneaux (14) susceptibles d'être éclairés.

7. Élément (10) d'affichage optique selon la revendication 6, dans lequel la distance radiale entre des anneaux (14) susceptibles d'être éclairés, voisins, est comprise entre 0,1 et 0,3 mm.

8. Élément (10) d'affichage optique selon la revendication 7, dans lequel la distance radiale entre des anneaux (14) susceptibles d'être éclairés, voisins, est d'environ 0,2 mm.

9. Élément (10) d'affichage optique selon l'une des revendications précédentes, **caractérisé en ce que** les faces latérales (30) des corps guides de lumière (18) présentent un revêtement (32) de blocage de lumière.
